# EUROPEAN PATENT SPECIFICATION

(11) **EP 4 579 395 B1**
(45) Date of publication and mention of the grant of the patent: **02.12.2026**
(21) Application number: 24212913.8
(22) Date of filing: 14.11.2024
(51) Int. Cl.: G06F 1/3234, G06F 1/324, G06F 1/3209, G06F 13/12, G06F 1/3206

(54) **IO FABRIC PERFORMANCE MANAGEMENT**
IO-FABRIC-LEISTUNGSVERWALTUNG
GESTION DE PERFORMANCE DE MATRICE D'E/S

(30) Priority: 29.12.2023 US 202318400155
(43) Date of publication of application: 02.07.2025
(73) Proprietor: INTEL Corporation, Santa Clara, CA 95054 (US)
(72) Inventor: Venugopal, Shruthi, Austin TX, 78746 (US); Palit, Nilanjan, Northborough MA, 01532 (US); Purandare, Adwait, Beaverton, 97006 (US)
(74) Representative: Samson & Partner Patentanwälte mbB

(56) References cited:
- US-A1- 2022 100 247

## Description

### TECHNICAL FIELD

Embodiments of the invention relate to the field of integrated circuits; and more specifically, to the field of input/output (IO) traffic management.

### TECHNICAL FIELD

US 2022/100247 A1 pertains to hierarchical power management. For example, an apparatus comprises: a plurality of dies including processor dies and I/O dies; a plurality of power management units, wherein each die of the plurality includes a power management unit such that at least one of the power management units is a supervisor unit and at least two of the power management units are supervisee units, wherein the power management units are arranged in a hierarchical manner such that the supervisor unit controls the at least two supervisee units; a first interconnect fabric coupled to the supervisor unit and the supervisee units; and a second interconnect fabric coupled to the supervisor unit and the supervisee units, wherein the second interconnect fabric is faster than the first interconnect fabric.

### SUMMARY OF THE INVENTION

The present invention is defined in the independent claims. The dependent claims define embodiments thereof.

### BRIEF DESCRIPTION OF THE DRAWINGS

The disclosure may best be understood by referring to the following description and accompanying drawings that are used to illustrate embodiments of the invention. In the drawings:
Fig. 1 is a block diagram depicting a processing system in accordance with some embodiments.
Fig. 2 is a block diagram showing an IO fabric traffic response circuit in accordance with some embodiments.
Fig. 3 is a flow diagram showing an IO fabric bandwidth control routine in accordance with some embodiments.
Fig. 4 is a block diagram showing an exemplary IO interface circuit in accordance with some embodiments.
Fig. 5 illustrates an example computing system in accordance with some embodiments.
Fig. 6 illustrates a block diagram of an example processor that may be used in the system of Fig. 5 in accordance with some embodiments.

### DETAILED DESCRIPTION

Low utilization scenarios in cloud-based server usage are relatively common. Several factors contribute to their prevalence such as variable workloads (high demand followed by periods of low demand), non-essential services requiring resources or seasonal variation in demand. Notwithstanding, datacenter operators typically provision for the peak usage that could potentially occur. In some cases, customers may even disable low power states such as ACPI (Advanced Configuration Power Interface) core C6 or lower states in order to improve responsiveness at the expense of higher power consumption, leaving their processor systems in an elevated idle state (e.g., not lower than a C1E state) such as Active Idle, Performance Idle, or PC0 Idle. Unfortunately, for these elevated idle states to provide the desired responsiveness, suitably high IO (input/output) fabric frequency floors (e.g., 2 GHz or higher) are often maintained in these modes, even when there is little if any traffic, in order to ensure that the IO fabric is not a bottle-neck when IO communications (e.g., network traffic) are required for processor system servicing. If the IO fabric is in a lower power state, or otherwise operating at an insufficiently low frequency, processing delays of up to several milli-seconds can occur, which is typically not acceptable. At the same time, keeping the IO fabric in higher performance ready states, even when not being even moderately utilized, consumes an excessive amount of wasted power. This can be particularly problematic in datacenters where many processors are typically running almost all of the time. Accordingly, improved approaches are desired.

In order to provide both power savings and IO fabric responsiveness, an IO interface stack feedback capability is provided. In some embodiments, during processor idle conditions, fabric frequency may be kept at a relatively low level and then increased in response to detection of increased IO interface traffic. This can address the problem of slow responses to sudden bursts of traffic. For example, it can allow users to shift their focus away from fixing fabric frequency as a primary performance bottleneck and instead let traffic patterns dictate suitable frequency levels.

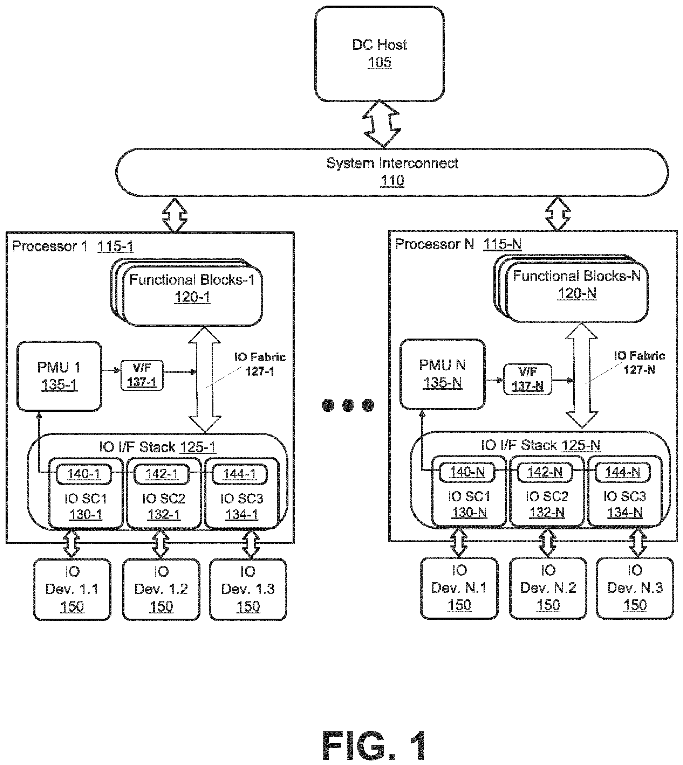

Fig. 1 is a block diagram depicting a processing system such as for a cloud, or web, service provider in accordance with some embodiments. The cloud service system, typically implemented in a datacenter, generally includes a datacenter host processor 105 coupled to multiple (N) processors 115 through a system interconnect fabric 110. Each of the processors 115 may be implemented using any suitable processing apparatus such as a system on chip (SOC), system on package (SOP), CPU (central processing unit) or the like. The processors 115 each include a plurality of functional blocks (or circuits) 120 coupled to an IO interface stack circuit (also referred to herein simply as IO stack or IO interface) 125 through IO fabric 127. The IO interface circuit 125, in turn, couples one or more IO devices 150 to the processor functional blocks 115 through the IO fabric 127. Each processor 115 also includes a power management unit (PMU) 135 to, among other things, manage power and performance of its associated processor 115 including the IO fabric 127 through a resource management circuit that includes a voltage and frequency control circuit 137, as is indicated.

The functional blocks 120 correspond to the various functional circuits that can make up a processor. They can include but are not limited to cores, core complexes, intellectual property (IP) blocks such as digital signal processors (DSPs), display engines (Des), image signal processors (ISPs), artificial intelligence (AI) processing units, security engines, memory such as cache systems, interface controllers, system agents, and the like. They also may include communications fabrics such as intra-processor control/data fabrics and memory fabrics for communications within the processor and externally to memory (not shown) and to IO devices 150 through the IO fabric 127.

A PMU 135 includes one or more microcontrollers, state machines and/or other logic circuits for controlling various aspects of its associated processor. For example, it may manage functions such as security, boot configuration, and power and performance including utilized and allocated power along with thermal management. Note that in some implementations, a PMU may also be referred to as a P-unit, a system management unit (SMU), a power control unit (PCU), a system management controller (SMC) and the like and may include multiple different controllers and dedicated hardware circuits for managing specific functional circuits (blocks) within a processor. The PMU executes code, which may include multiple separate software and/or firmware modules to perform these and other functions.

The IO fabric 127 may comprise one or more busses, mesh, spine, and/or ring networks and/or other point-to-point interconnect systems for distributing data between the IO devices 150, memory, and the various functional blocks 120 of a processor 115. Data is typically conveyed as packets through switches and routers within the fabric but can also be conveyed by way of dedicated or switched register level transfers, depending on the source or destination agents. The IO fabric may include several different clocks whose speeds generally define the bandwidth, or traffic flow capability, of the fabric at a given point in time. The voltage/frequency control circuit 137 includes control circuitry for controlling clock generation circuits such as phase locked loops (PLLs), delay locked loops (DLLs), clock synthesis circuits, and frequency multiplier/divider circuits, as well as the voltage regulators used to power these circuits. The V/F control circuit 137 may be controlled, in turn, by a PMU 135 and/or by a separate V/F selection circuit (discussed below) to control the operating frequency, or frequencies, of the IO fabric 127 in order to adjust its bandwidth based on device traffic demands.

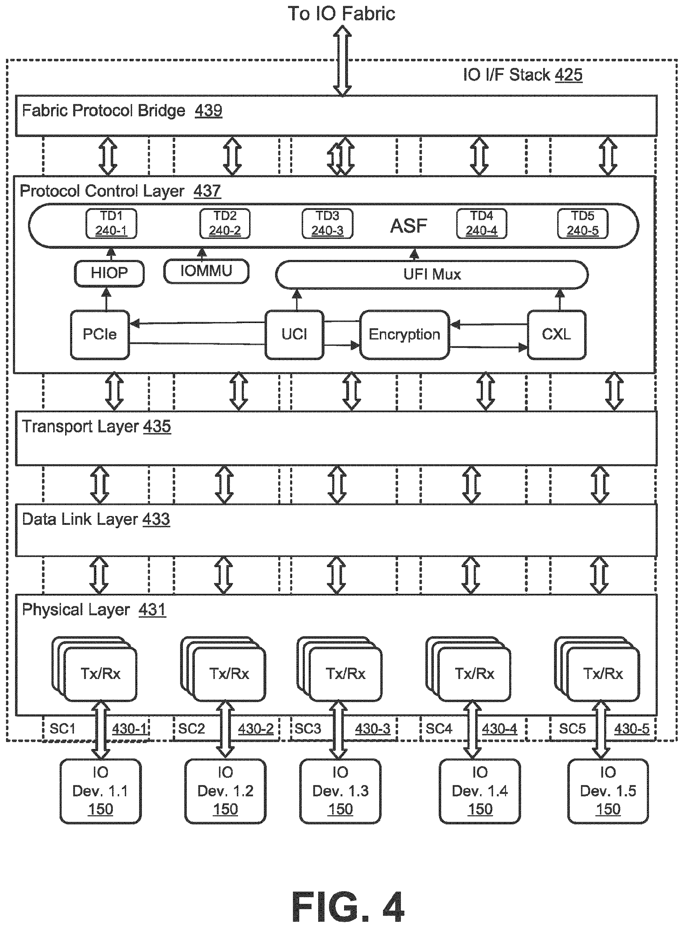

The IO interface circuit (also referred to as IO interface stack or IO stack) 125 generally includes circuitry for implementing OSI (Open System Interconnect) communications layers between the IO devices 150 and the IO fabric 127. A more particular example is given below with respect to Fig. 4, but these layers, in general, can include a physical (PHY layer, a link layer, a transport layer, a protocol control layer, and/or a bridge layer for translating and conditioning the data that is to be transferred between the processor functional blocks 120 and the IO devices 150. The IO devices 150 generally correspond to external adaptors or cards (e.g., network interface card) that may be linked with the IO interface circuit 125 using one or more different interconnect protocols such as PCIe (Peripheral Chip Interconnect Express), CXL (Compute Express Link), Gen-Z, OpenCAPI, In-Die Interface (IDI), Cache Coherent Interconnect for Accelerators (CCIX), UltraPath Interconnect (UPI), and the like.

The IO interface circuit 125 includes one or more IO stack channels 130 that each may be linked with a separate IO device 150. The IO stack channels 130 may be implemented logically and/or physically using both separate and shared communications circuits within the IO interface circuit 125. In some embodiments, one or more of the IO stack channels 130 include a traffic detector circuit 140 for monitoring traffic from one or more of the IO devices and signaling the IO fabric V/F control circuitry 137 to increase IO fabric operating frequency when IO traffic in the IO interface circuit (or IO stack channel) sufficiently increases. An exemplary traffic detector circuit is discussed in the next section.

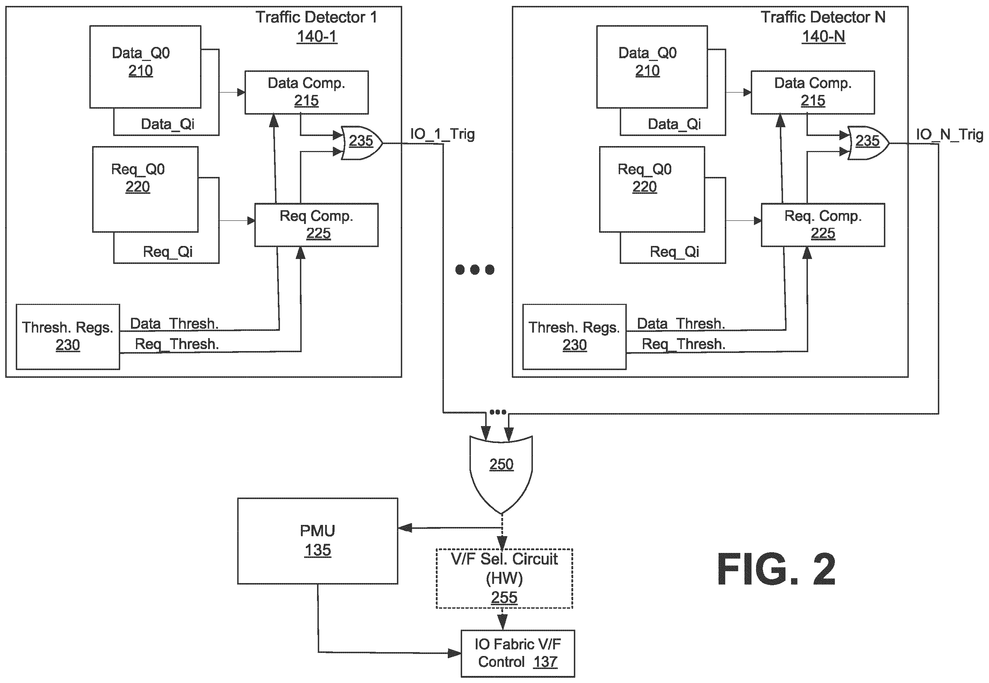

Fig. 2 is a block diagram showing an IO fabric traffic response circuit in accordance with some embodiments. The circuit generally includes traffic detectors 140, e.g., one for each IO stack channel, OR logic circuitry 250, and IO fabric V/F (hereinafter V/F) selection circuit 255, coupled as shown with PMU 135 and IO V/F control circuit 137. The traffic detector circuits 140 are coupled to inputs of the OR circuit 250, which asserts at its output if any of the traffic detector circuits indicate a sufficient increase in IO device traffic for their respective channel.

The IO traffic detector circuits 140 include a data comparator circuit 215, a request comparator circuit 225, threshold register 230, and an OR logic circuit 235, coupled together as shown. The data comparator circuit 215 is coupled within its IO stack channel to monitor data queues (Queue 0 through queue i), which indicate an amount of data traffic flowing, or attempting to flow, through the IO stack channel. The data comparator has a data threshold that is defined by a programmable data threshold value stored in register 230. When the monitored data queues indicate that the amount of data traffic has exceeded this threshold, the comparator 215 asserts at its output, which causes OR circuit 235 to assert an IO trigger at its output.

Similarly, the request comparator circuit 225 is coupled within its IO stack channel to monitor request queues (e.g., read and write requests), which indirectly indicate an amount of data that will be flowing, or is trying to flow, through the IO stack channel. The request comparator has a request threshold that is defined by a programmable request threshold value stored in register 230. When the monitored request queues indicate that the amount of requests has exceeded this threshold, the request comparator 225 asserts at its output, which also causes OR circuit 235 to assert the IO trigger. In the depicted embodiment, the data and request queues are independently monitored since the number of requests, alone, does not necessarily indicate the amount of traffic to be flowing. For example, a few requests corresponding to large amounts of data can result in a large amount of data traffic. Therefore, data, itself, may also be monitored to catch such situations. At the same time, it is helpful to monitor requests since they can give a more advanced notice of impending increased IO bandwidth demands. Accordingly, these thresholds will likely be different and may be separately tuned to achieve desired operational results. (It should be appreciated that in some embodiments, either or both of these IO traffic indicators may be employed.)

The multiple traffic detector circuits (140-1 through 140-N) are used to monitor the various different IO device channel instances. In the depicted embodiment, they are globally OR'd through OR circuit 250, which is coupled to both the PMU 135 and V/F selection circuit 255, which can initiate a frequency change in V/F control circuit 137. In some embodiments, the V/F selection circuit is implemented with hardware such as a finite state machine (FSM) to quickly select an appropriate voltage frequency in V/F control circuit 137 in order to increase the operational frequency of the IO fabric as soon as is reasonably possible to meet the elevated traffic demands. The PMU 135 is also notified, however, for example to change the power state of the IO fabric, along with any other domains within the processor. In this way, the IO fabric frequency can be quickly adjusted (e.g., in tens or hundreds of micro-seconds) without having to wait for a full power state change, e.g., via PMU firmware, which can take up to several milli-seconds to occur. In some embodiments, the selection circuit 255, in cooperation with the utilized V/F control circuit 137, may be implemented using autonomous DVFS (dynamic voltage frequency scaling) capabilities. In some embodiments, the OR circuit 250 could be wired to the IO fabric's local power management controller (e.g., such as a resource controller comprising V/F control circuit 137), which can sequence the voltage and frequency settings to increase the fabric frequency.

In some embodiments, the PMU can also be used to program the threshold registers 230. The same settings could be used for the different IO stack channels but depending on the IO device and traffic type, a policy may be translated to an appropriate threshold value. The PMU may also monitor traffic patterns, power state residencies, and other factors as they are connected with the utilized thresholds in order to tune them over time for improved operations. In addition, the PMU may also employ a hysteresis timer to ensure that a low power mode is not entered as, or shortly after, increased IO demand is detected.

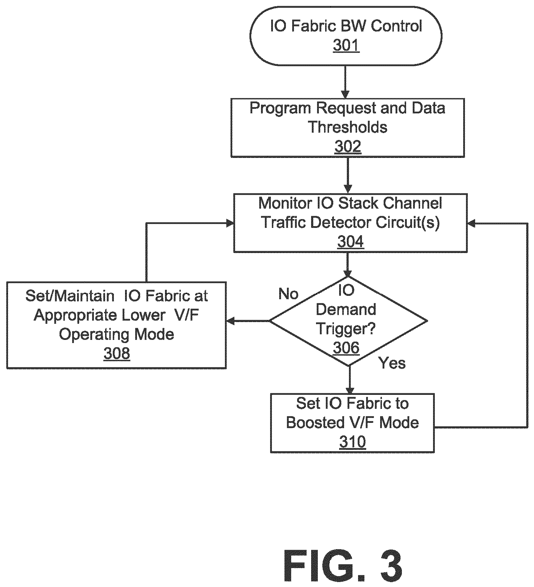

Fig. 3 is a flow diagram showing an IO fabric bandwidth control routine in accordance with some embodiments. Initially, at 302, the threshold registers for the various traffic detector circuits are programmed with suitable request and data traffic queue threshold levels. At 304, the IO stack channel traffic detector circuits are monitored. This may be done by determining if any of the data or request queue comparators have indicated that their threshold levels have been exceeded. As with the diagram of Fig. 2, this may be done using OR logic, increasing IO fabric frequency if any of the traffic detector circuits detect sufficiently increased IO traffic. Alternatively, this may be done by monitoring a selected combination of channels or by evaluating channel traffic using different weights.

At 306, if an IO demand trigger has occurred, then at 310, the IO fabric frequency is suitably boosted. This may also cause the PMU to change one or more power states, e.g., for the IO fabric and/or for other functional blocks such as cores or memory fabric. This can depend on how the channels are monitored, for example, based on which channels are incurring increased traffic conditions. Otherwise, at 308, the IO fabric frequency is set to, or kept at, a suitably low frequency level, e.g., corresponding to a current processor power state. For example, if all heuristics indicate there is no IO device traffic, a performance idle state may be entered, and the IO fabric may enter a low power mode by dropping the frequency to a minimum ratio or even gated off. In some embodiments, if the fabric is already in an idle state whether due to low activity or package conditions, the PLL itself may be bypassed or switched off. Either from 308 or 310, the routine then returns back to 304, once again to monitor IO stack channel traffic through the one or more traffic detector circuits.

Fig. 4 is a block diagram showing an exemplary IO interface circuit (also referred to as IO stack or IO interface stack) 425 in accordance with some embodiments. The depicted IO stack 425 may, for example, be used as an IO interface circuit 125 in the processing system of Fig. 1. In this example, the IO stack 425 serves as an IO interface between five IO devices 150 (1.1-1.5) and the IO fabric within a processor. It generally includes a physical (PHY) layer 431, data link layer 433, transport layer 435, protocol control layer 437, and fabric protocol bridge 439. The layers are logically, as well as physically, divided into five separate IO stack channels (430-1 through 430-5), as shown, and service the five IO devices (1.1-1.5). Each IO stack channel may include logic (e.g., implemented in hardware circuitry, firmware, and/or software) to implement all or a subset of these layers to accommodate one or more interconnect protocols (e.g., PCIe, Compute Express Link (CXL), Gen-Z, OpenCAPI, In-Die Interface (IDI), Cache Coherent Interconnect for Accelerators (CCIX), UltraPath Interconnect (UPI), etc.).

In some embodiments, the IO interface stack may constitute a UFI (unified fabric interface) implemented to provide a clean protocol boundary to the IO fabric perimeters, allowing functional blocks 115 within a processor 115 to operate without requiring knowledge of fabric details. For example, a UFI interface may define configurable physical channels to satisfy bandwidth requirements of individual functional blocks. The UFI definition may flexibly map multiple, various protocols (e.g., In-Die Interface, UPI, CXL, etc.) over these physical channels.

The physical layer 431 is the lowest layer in the stack. It includes the transmitter (Tx) and receiver (Rx) circuits used for sending and receiving bit streams into and out from the IO devices 150. The data link layer 433, among other things, is used for encoding/decoding bit streams and serves as a gatekeeper for each individual channel. It is typically used to ensure that the data being sent back and forth across the link is correct and received in the same order it was sent. It makes sure that each packet makes it, in tact, across the link.

The data link layer takes TLPs (transport layer packets) from the transmit side of the Transaction Layer and continues the process of building them into, e.g., a PCI Express transaction. it also may add a sequence number to the front of the packet and an error checker to the tail. The transport layer 435 receives read and write requests from the control layer and converts them to request packets for transmission to the link layer, and it is also responsible for receiving response packets from the link Layer and matching them with originating requests. Each packet has a unique identifier that enables response packets to reach the originator.

The protocol control layer 437 comprises protocol controllers such as PCIe, UCI and CXL (as shown), along with arbitration and multiplexing circuitry to appropriately route packets to a correct protocol controller for translation and conditioning. It may also have encryption/decryption circuitry, as indicated, along with HIOP (host I/O processor) and an IOMMU (IO memory management unit). The HIOP may be used to convert load/store protocols like PCIe to unordered protocols like IDI/UPI while maintaining the system requirements that allow producer/consumer work flows to function. The IOMMU is a memory management unit that translates addresses between the processor and physical memory. This translation process is often known as memory mapping because addresses are mapped from a logical space into a physical space.

The IO interface circuit 425 also has an ASF (an asynchronous first-in-first-out) buffer, which in the depicted embodiment, is also part of the protocol control layer 437. Among other things, the ASF buffers data packets and serves as a clock crossing between the IO devices, on the one side, and the IO fabric through the IO fabric bridge 439, on the other side. The IO fabric Bridge routes packets to/from the functional blocks 120 (e.g., cores, memory, etc.).

In the depicted embodiment, the ASF circuit includes traffic detector circuits 240 (240-1 through 240-5), one for each stack channel to monitor traffic there within as described above. It should be appreciated that the locations of the traffic detector circuits 240 for monitoring traffic may be anywhere in the IO stack, e.g., from the PHY layer to the clock crossing FIFOs or the bridge to the fabric. On the one hand, putting the traffic detectors deeper in the stack (e.g., the PHY or the data link layer) provides early warning, but on the other hand, transport layer packets that will not show up at the fabric may have to be filtered out. In some embodiments, implementing the source higher in the stack (e.g., in the control layer or the bridge) may be preferred since they do not see the transport layer packets (which may not be of much use for traffic detection. Moreover, the control and bridge layers also typically have deeper ingress buffers that can allow for finer-grained tuning of the ingress traffic trigger thresholds. Regardless, the traffic detection should ideally be done prior to the clock crossing into the fabric domain to have a representative indication of the packets being backed up in the IO interface circuit.

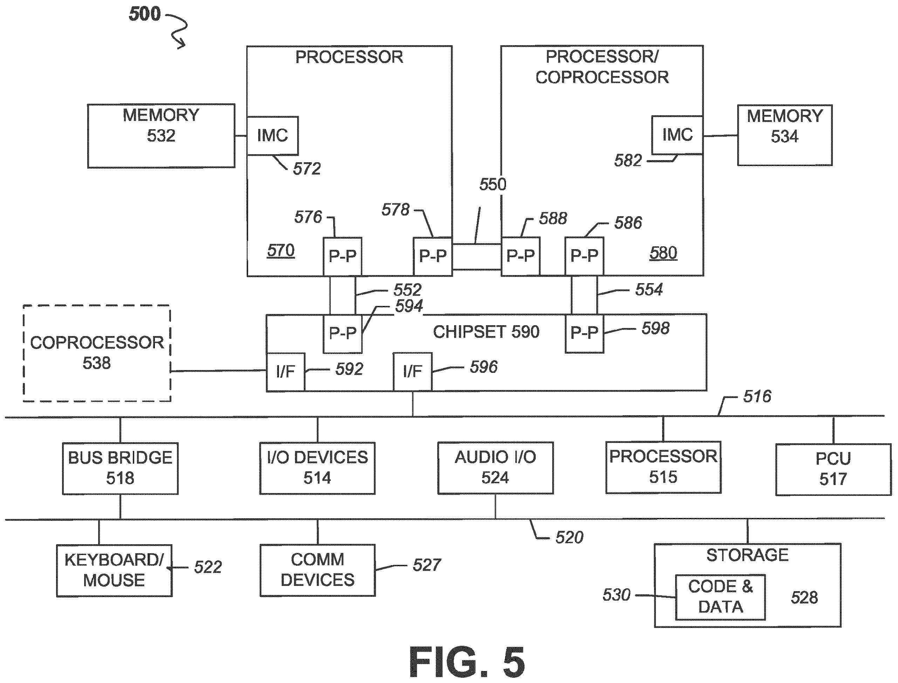

Fig. 5 illustrates an example computing system. Multiprocessor system 500 is an interfaced system and includes a plurality of processors including a first processor 570 and a second processor 580 coupled via an interface 550 such as a point-to-point (P-P) interconnect, a fabric, and/or bus. In some examples, the first processor 570 and the second processor 580 are homogeneous. In some examples, first processor 570 and the second processor 580 are heterogenous. Though the example system 500 is shown to have two processors, the system may have three or more processors, or may be a single processor system. In some examples, the computing system is implemented, wholly or partially, with a system on a chip (SoC) or a multichip (or multi-chiplet) module, in the same or in different package combinations.

Processors 570 and 580 are shown including integrated memory controller (IMC) circuitry 572 and 582, respectively. Processor 570 also includes interface circuits 576 and 578 that may be implemented, for example, with an IO interface circuit as described herein. , Processor 570 also includes core sets. Similarly, second processor 580 includes interface circuits 586 and 588, along with a core set as well. A core set generally refers to one or more compute cores that may or may not be grouped into different clusters, hierarchal groups, or groups of common core types. Cores may be configured differently for performing different functions and/or instructions at different performance and/or power levels. The processors may also include other blocks such as memory and other processing unit engines.

Processors 570, 580 may exchange information via the interface 550 using interface circuits 578, 588. IMCs 572 and 582 couple the processors 570, 580 to respective memories, namely a memory 532 and a memory 534, which may be portions of main memory locally attached to the respective processors.

Processors 570, 580 may each exchange information with a network interface (NW I/F) 590 via individual interfaces 552, 554 using interface circuits 576, 594, 586, 598. The network interface 590 (e.g., one or more of an interconnect, bus, and/or fabric, and in some examples is a chipset) may optionally exchange information with a coprocessor 538 via an interface circuit 592. In some examples, the coprocessor 538 is a special-purpose processor, such as, for example, a high-throughput processor, a network or communication processor, compression engine, graphics processor, general purpose graphics processing unit (GPGPU), neural-network processing unit (NPU), embedded processor, or the like.

A shared cache (not shown) may be included in either processor 570, 580 or outside of both processors, yet connected with the processors via an interface such as P-P interconnect, such that either or both processors' local cache information may be stored in the shared cache if a processor is placed into a low power mode.

Network interface 590 may be coupled to a first interface 516 via interface circuit 596. In some examples, first interface 516 may be an interface such as a Peripheral Component Interconnect (PCI) interconnect, a PCI Express interconnect, or another I/O interconnect. In some examples, first interface 516 is coupled to a power control unit (PCU) 517, which may include circuitry, software, and/or firmware to perform power management operations with regard to the processors 570, 580 and/or co-processor 538. PCU 517 provides control information to one or more voltage regulators (not shown) to cause the voltage regulator(s) to generate the appropriate regulated voltage(s). PCU 517 also provides control information to control the operating voltage generated. In various examples, PCU 517 may include a variety of power management logic units (circuitry) to perform hardware-based power management. Such power management may be wholly processor controlled (e.g., by various processor hardware, and which may be triggered by workload and/or power, thermal or other processor constraints) and/or the power management may be performed responsive to external sources (such as a platform or power management source or system software).

PCU 517 is illustrated as being present as logic separate from the processor 570 and/or processor 580. In other cases, PCU 517 may execute on a given one or more of cores (not shown) of processor 570 or 580. In some cases, PCU 517 may be implemented as a microcontroller (dedicated or general-purpose) or other control logic configured to execute its own dedicated power management code, sometimes referred to as P-code. In yet other examples, power management operations to be performed by PCU 517 may be implemented externally to a processor, such as by way of a separate power management integrated circuit (PMIC) or another component external to the processor. In yet other examples, power management operations to be performed by PCU 517 may be implemented within BIOS or other system software. Along these lines, power management may be performed in concert with other power control units implemented autonomously or semi-autonomously, e.g., as controllers or executing software in cores, clusters, IP blocks and/or in other parts of the overall system.

Various I/O devices 514 may be coupled to first interface 516, along with a bus bridge 518 which couples first interface 516 to a second interface 520. In some examples, one or more additional processor(s) 515, such as coprocessors, high throughput many integrated core (MIC) processors, GPGPUs, accelerators (such as graphics accelerators or digital signal processing (DSP) units), field programmable gate arrays (FPGAs), or any other processor, are coupled to first interface 516. In some examples, second interface 520 may be a low pin count (LPC) interface. Various devices may be coupled to second interface 520 including, for example, a keyboard and/or mouse 522, communication devices 527 and storage circuitry 528. Storage circuitry 528 may be one or more non-transitory machine-readable storage media as described below, such as a disk drive or other mass storage device which may include instructions/code and data 530 and may implement the storage in some examples. Further, an audio I/O 524 may be coupled to second interface 520. Note that other architectures than the point-to-point architecture described above are possible. For example, instead of the point-to-point architecture, a system such as multiprocessor system 500 may implement a multi-drop interface or other such architecture.

Processor cores may be implemented in different ways, for different purposes, and in different processors. For instance, implementations of such cores may include: 1) a general purpose in-order core intended for general-purpose computing; 2) a high-performance general purpose out-of-order core intended for general-purpose computing; 3) a special purpose core intended primarily for graphics and/or scientific (throughput) computing. Implementations of different processors may include: 1) a CPU including one or more general purpose in-order cores intended for general-purpose computing and/or one or more general purpose out-of-order cores intended for general-purpose computing; and 2) a coprocessor including one or more special purpose cores intended primarily for graphics and/or scientific (throughput) computing. Such different processors lead to different computer system architectures, which may include: 1) the coprocessor on a separate chip from the CPU; 2) the coprocessor on a separate die in the same package as a CPU; 3) the coprocessor on the same die as a CPU (in which case, such a coprocessor is sometimes referred to as special purpose logic, such as integrated graphics and/or scientific (throughput) logic, or as special purpose cores); and 4) a system on a chip (SoC) that may be included on the same die as the described CPU (sometimes referred to as the application core(s) or application processor(s)), the above described coprocessor, and additional functionality. Example core architectures are described next, followed by descriptions of example processors and computer architectures.

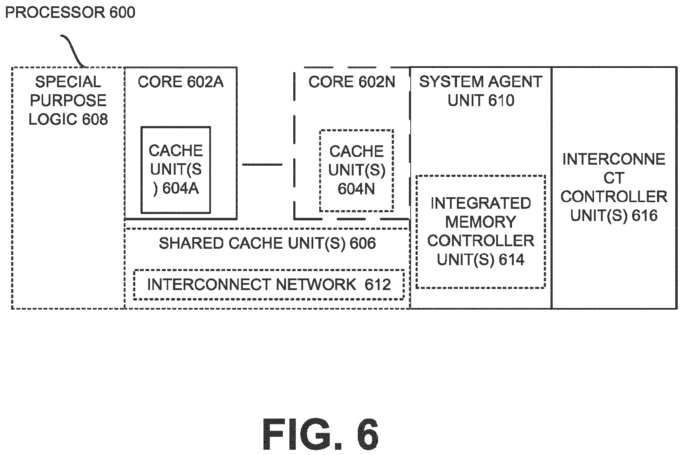

Fig. 6 illustrates a block diagram of an example processor 600 that may be used in the systems of Figs. 1 or 5 in accordance with some embodiments. The depicted processor may have one or more cores and an integrated memory controller. The solid lined boxes illustrate a processor 600 with a single core 602(A), system agent unit circuitry 610, and a set of one or more interface controller unit(s) circuitry 616, while the optional addition of the dashed lined boxes illustrates an alternative processor 600 with multiple cores 602(A)-(N), a set of one or more integrated memory controller unit(s) circuitry 614 in the system agent unit circuitry 610, and special purpose logic 608, as well as a set of one or more interface controller units circuitry 616. Note that the processor 600 may be one of the processors 570 or 580, or co-processor 538 or 515 of FIG. 5.

Thus, different implementations of the processor 600 may include: 1) a CPU with the special purpose logic 608 being integrated graphics and/or scientific (throughput) logic (which may include one or more cores, not shown), and the cores 602(A)-(N) being one or more general purpose cores (e.g., general purpose in-order cores, general purpose out-of-order cores, or a combination of the two); 2) a coprocessor with the cores 602(A)-(N) being a large number of special purpose cores intended primarily for graphics and/or scientific (throughput); and 3) a coprocessor with the cores 602(A)-(N) being a large number of general purpose in-order cores. Thus, the processor 600 may be a general-purpose processor, coprocessor or special-purpose processor, such as, for example, a network or communication processor, compression engine, graphics processor, GPGPU (general purpose graphics processing unit), a high throughput many integrated core (MIC) coprocessor (including 30 or more cores), embedded processor, or the like. The processor may be implemented on one or more chips. The processor 600 may be a part of and/or may be implemented on one or more substrates using any of a number of process technologies, such as, for example, complementary metal oxide semiconductor (CMOS), bipolar CMOS (BiCMOS), P-type metal oxide semiconductor (PMOS), or N-type metal oxide semiconductor (NMOS).

A memory hierarchy includes one or more levels of cache unit(s) circuitry 604(A)-(N) within the cores 602(A)-(N), a set of one or more shared cache unit(s) circuitry 606, and external memory (not shown) coupled to the set of integrated memory controller unit(s) circuitry 614. The set of one or more shared cache unit(s) circuitry 606 may include one or more mid-level caches, such as level 2 (L2), level 3 (L3), level 4 (L4), or other levels of cache, such as a last level cache (LLC), and/or combinations thereof. While in some examples interface network circuitry 612 (e.g., a ring interconnect) interfaces the special purpose logic 608 (e.g., integrated graphics logic), the set of shared cache unit(s) circuitry 606, and the system agent unit circuitry 610, alternative examples use any number of well-known techniques for interfacing such units. In some examples, coherency is maintained between one or more of the shared cache unit(s) circuitry 606 and cores 602(A)-(N). In some examples, interface controller units circuitry 616 couple the cores 602 to one or more other devices 618 such as one or more I/O devices, storage, one or more communication devices (e.g., wireless networking, wired networking, etc.), etc.

In some examples, one or more of the cores 602(A)-(N) are capable of multi-threading. The system agent unit circuitry 610 includes those components coordinating and operating cores 602(A)-(N). The system agent unit circuitry 610 may include, for example, power control unit (PCU) circuitry and/or display unit circuitry (not shown). The PCU may be or may include logic and components needed for regulating the power state of the cores 602(A)-(N) and/or the special purpose logic 608 (e.g., integrated graphics logic). The display unit circuitry is for driving one or more externally connected displays.

The cores 602(A)-(N) may be homogenous in terms of instruction set architecture (ISA). Alternatively, the cores 602(A)-(N) may be heterogeneous in terms of ISA; that is, a subset of the cores 602(A)-(N) may be capable of executing an ISA, while other cores may be capable of executing only a subset of that ISA or another ISA.

Reference in the specification to "an embodiment," "one embodiment," "some embodiments," or "other embodiments" means that a particular feature, structure, or characteristic described in connection with the embodiments is included in at least some embodiments, but not necessarily all embodiments. The various appearances of "an embodiment," "one embodiment," or "some embodiments" are not necessarily all referring to the same embodiments. If the specification states a component, feature, structure, or characteristic "may," "might," or "could" be included, that particular component, feature, structure, or characteristic is not required to be included.

Throughout the specification, and in the claims, the term "connected" means a direct connection, such as electrical, mechanical, or magnetic connection between the things that are connected, without any intermediary devices.

The term "coupled" means a direct or indirect connection, such as a direct electrical, mechanical, or magnetic connection between the things that are connected or an indirect connection, through one or more passive or active intermediary devices.

The term "circuit" or "module" may refer to one or more passive and/or active components that are arranged to cooperate with one another to provide a desired function. It should be appreciated that different circuits or modules may consist of separate components, they may include both distinct and shared components, or they may consist of the same components. For example, A controller circuit may be a first circuit for performing a first function, and at the same time, it may be a second controller circuit for performing a second function, related or not related to the first function.

The meaning of "in" includes "in" and "on" unless expressly distinguished for a specific description.

The terms "substantially," "close," "approximately," "near," and "about," unless otherwise indicated, generally refer to being within +/-10% of a target value.

Unless otherwise specified, the use of the ordinal adjectives "first," "second," and "third," etc., to describe a common object, merely indicate that different instances of like objects are being referred to and are not intended to imply that the objects so described must be in a given sequence, either temporally, spatially, in ranking or in any other manner

For the purposes of the present disclosure, phrases "A and/or B" and "A or B" mean (A), (B), or (A and B). For the purposes of the present disclosure, the phrase "A, B, and/or C" means (A), (B), (C), (A and B), (A and C), (B and C), or (A, B and C).

It is pointed out that those elements of the figures having the same reference numbers (or names) as the elements of any other figure can operate or function in any manner similar to that described but are not limited to such.

For purposes of the embodiments, unless expressly described differently, the transistors in various circuits and logic blocks described herein may be implemented with any suitable transistor type such as field effect transistors (FETs) or bipolar type transistors. FET transistor types may include but are not limited to metal oxide semiconductor (MOS) type FETs such as tri-gate, FinFET, and gate all around (GAA) FET transistors, as well as tunneling FET (TFET) transistors, ferroelectric FET (FeFET) transistors, or other transistor device types such as carbon nanotubes or spintronic devices.

In addition, well-known power/ground connections to integrated circuit (IC) chips and other components may or may not be shown within the presented figures, for simplicity of illustration and discussion, and so as not to obscure the disclosure. Further, arrangements may be shown in block diagram form in order to avoid obscuring the disclosure, and also in view of the fact that specifics with respect to implementation of such block diagram arrangements are dependent upon the platform within which the present disclosure is to be implemented.

As defined herein, the term "computer readable storage medium" means a storage medium that contains or stores program code for use by or in connection with an instruction execution system, apparatus, or device. As defined herein, a "computer readable storage medium" is not a transitory, propagating signal per se. A computer readable storage medium may be, but is not limited to, an electronic storage device, a magnetic storage device, an optical storage device, an electromagnetic storage device, a semiconductor storage device, or any suitable combination of the foregoing. Memory elements, as described herein, are examples of a computer readable storage medium.

As defined herein, the term "if" means "when" or "upon" or "in response to" or "responsive to," depending upon the context. Thus, the phrase "if it is determined" or "if [a stated condition or event] is detected" may be construed to mean "upon determining" or "in response to determining" or "upon detecting [the stated condition or event]" or "in response to detecting [the stated condition or event]" or "responsive to detecting [the stated condition or event]" depending on the context. As defined herein, the term "responsive to" means responding or reacting readily to an action or event. Thus, if a second action is performed "responsive to" a first action, there is a causal relationship between an occurrence of the first action and an occurrence of the second action. The term "responsive to" indicates the causal relationship.

As defined herein, the term "processor" means at least one hardware circuit configured to carry out instructions contained in program code. The hardware circuit may be implemented with one or more integrated circuits. Examples of a processor include, but are not limited to, a central processing unit (CPU), an array processor, a vector processor, a digital signal processor (DSP), a field-programmable gate array (FPGA), a programmable logic array (PLA), an application specific integrated circuit (ASIC), programmable logic circuitry, a graphics processing unit (GPU), a controller, and so forth. It should be appreciated that a logical processor, on the other hand, is a processing abstraction associated with a core, for example when one or more SMT cores are being used such that multiple logical processors may be associated with a given core, for example, in the context of core thread assignment.

It should be appreciated that a processor or processor system may be implemented in various different manners. For example, it may be implemented on a single die, multiple dies (dielets, chiplets), one or more dies in a common package, or one or more dies in multiple packages. Along these lines, some of these blocks may be located separately on different dies or together on two or more different dies.

While the flow diagrams in the figures show a particular order of operations performed by certain embodiments of the invention, it should be understood that such order is exemplary (e.g., alternative embodiments may perform the operations in a different order, combine certain operations, overlap certain operations, etc.).

## Claims

1. An apparatus, comprising:
an input/output, IO, fabric (127);
an IO interface (125) configured to couple one or more IO devices (150) to the IO fabric (127), the IO interface (125) including at least one traffic detector circuit (140); and
a control circuit (137) coupled to the at least one traffic detector circuit (140), the control circuit (137) configured to increase an operating frequency of the IO fabric (127) in response to the at least one traffic detector circuit (140) detecting IO data traffic elevated above a first threshold,
wherein the at least one traffic detector circuit (140) has a first comparator circuit (215) configured to monitor data queues of the IO interface (125), which indicate an amount of the IO data traffic flowing or attempting to flow through the IO interface (125), to detect the IO data traffic elevated above the first threshold, the first threshold defined by a programmable data threshold value stored in a register (230),
wherein the at least one traffic detector circuit (140) has a second comparator circuit (225) configured to monitor request queues of the IO interface (125) for read and write requests, which indicate an amount of IO request traffic for data that will be flowing or is trying to flow through the IO interface (125), to detect the IO request traffic elevated above a second threshold, the second threshold defined by a programmable request threshold value stored in the register (230), and
wherein the data and request queues are independently monitored by the at least one traffic detector circuit (140).

2. The apparatus of claim 1, wherein the IO interface (125) has a plurality of channels (130) configured to service the one or more IO devices (150), wherein each channel (130) has one or more of the at least one traffic detector circuits (140).

3. The apparatus of claim 2, wherein the control circuit (137) is configured to elevate the IO fabric frequency in response to any of the one or more traffic detector circuits (140) detecting IO traffic in an associated channel (130) being at or above an associated traffic threshold level.

4. The apparatus of claim 1, wherein the control circuit (137) is configured to increase the operating frequency of the IO fabric (127) in response to either the IO data traffic being at or above the first threshold or the IO request traffic being at or above the second threshold.

5. The apparatus of claim 1, wherein the control circuit (137) includes a dedicated hardware circuit configured to cause the IO fabric operational frequency to increase without requiring a power state transition.

6. The apparatus of claim 5, wherein the control circuit (137) is part of a power management unit circuit (135).

7. The apparatus of claim 5, wherein the control circuit (137) is part of the IO fabric (127).

8. The apparatus of claim 6, or claim 7, wherein the IO fabric (127) is part of a processor having at least one processing core and a separate memory fabric.

9. The apparatus of claim 8, wherein the at least one traffic detector circuit (140) is part of a protocol control layer within the IO interface (125).

10. The apparatus of claim 9, wherein the at least one traffic detector circuit (140) is coupled to an asynchronous first-in-first-out buffer to monitor the IO traffic.

11. The apparatus of claim 9, wherein the at least one traffic detector circuit (140) is coupled to one or more protocol controllers within the protocol control layer to monitor the IO traffic.

## Patentansprüche

1. Einrichtung, umfassend:
eine Eingangs-/Ausgangs-Fabric, E/A-Fabric, (127), umfassend:
eine E/A-Schnittstelle (125), die konfiguriert ist, um eine oder mehrere E/A-Vorrichtungen (150) mit der E/A-Fabric (127) zu koppeln, wobei die E/A-Schnittstelle (125) mindestens eine Detektorschaltung für einen Datenverkehr (140) beinhaltet; und
eine Steuerschaltung (137), die mit der mindestens einen Detektorschaltung für einen Datenverkehr (140) gekoppelt ist, wobei die Steuerschaltung (137) konfiguriert ist, um eine Betriebsfrequenz der E/A-Fabric (127) als Reaktion darauf zu erhöhen, dass die mindestens eine Detektorschaltung für einen Datenverkehr (140) erkennt, dass ein E/A-Datenverkehr einen ersten Schwellenwert überschritten hat,
wobei die mindestens eine Detektorschaltung für einen Datenverkehr (140) eine erste Komparatorschaltung (215) aufweist, die konfiguriert ist, um Datenwarteschlangen der E/A-Schnittstelle (125) zu überwachen, die eine Menge des E/A-Datenverkehrs anzeigen, der durch die EA-Schnittstelle (125) fließt oder versucht, durch diese zu fließen, um den E/A-Datenverkehr zu erkennen, der den ersten Schwellenwert überschritten hat, wobei der erste Schwellenwert durch einen programmierbaren Datenschwellenwert definiert wird, der in einem Register (230) gespeichert ist,
wobei die mindestens eine Detektorschaltung für einen Datenverkehr (140) eine zweite Komparatorschaltung (225) aufweist, die konfiguriert ist, um Anforderungswarteschlangen der E/A-Schnittstelle (125) auf Lese- und Schreibanforderungen zu überwachen, die eine Menge eines E/A-Anforderungsdatenverkehrs für Daten anzeigen, die durch die E/A-Schnittstelle (125) fließen werden oder versuchen, durch diese zu fließen, um den E/A-Anforderungsdatenverkehr zu erkennen, der einen zweiten Schwellenwert überschritten hat, wobei der zweite Schwellenwert durch einen programmierbaren Anforderungsschwellenwert definiert wird, der in dem Register (230) gespeichert ist, und
wobei die Daten- und Anforderungswarteschlangen unabhängig voneinander von der mindestens einen Detektorschaltung für einen Datenverkehr (140) überwacht werden.

2. Einrichtung nach Anspruch 1, wobei die E/A-Schnittstelle (125) eine Mehrzahl von Kanälen (130) aufweist, die konfiguriert sind, um die eine oder die mehreren E/A-Vorrichtungen (150) zu bedienen, wobei jeder Kanal (130) eine oder mehrere der mindestens einen Detektorschaltung für einen Datenverkehr (140) aufweist.

3. Einrichtung nach Anspruch 2, wobei die Steuerschaltung (137) konfiguriert ist, um die E/A-Fabric-Frequenz als Reaktion darauf zu erhöhen, dass eine der einen oder mehreren Detektorschaltungen für einen Datenverkehr (140) einen E/A-Datenverkehr in einem assoziierten Kanal (130) erkennt, der auf oder über einem assoziierten Datenverkehrsschwellenwertpegel liegt.

4. Einrichtung nach Anspruch 1, wobei die Steuerschaltung (137) konfiguriert ist, um die Betriebsfrequenz der E/A-Fabric (127) als Reaktion darauf zu erhöhen, dass entweder der E/A-Datenverkehr an oder über dem ersten Schwellenwert liegt oder der E/A-Anforderungsdatenverkehr an oder über dem zweiten Schwellenwert liegt.

5. Einrichtung nach Anspruch 1, wobei die Steuerschaltung (137) eine zweckbestimmte Hardwareschaltung aufweist, die konfiguriert ist, um zu veranlassen, dass die Betriebsfrequenz der E/A-Fabric zunimmt, ohne einen Leistungszustandsübergang zu erfordern.

6. Einrichtung nach Anspruch 5, wobei die Steuerschaltung (137) Teil einer Schaltung einer Leistungsverwaltungseinheit (135) ist.

7. Einrichtung nach Anspruch 5, wobei die Steuerschaltung (137) Teil der EA-Fabric (127) ist.

8. Einrichtung nach Anspruch 6 oder Anspruch 7, wobei die EA-Fabric (127) Teil eines Prozessors ist, der mindestens einen Verarbeitungskern und eine separate Speicher-Fabric aufweist.

9. Einrichtung nach Anspruch 8, wobei die mindestens eine Detektorschaltung für einen Datenverkehr (140) Teil einer Protokollsteuerschicht innerhalb der E/A-Schnittstelle (125) ist.

10. Einrichtung nach Anspruch 9, wobei die mindestens eine Detektorschaltung für einen Datenverkehr (140) mit einem asynchronen First-in-First-Out-Puffer gekoppelt ist, um den E/A-Datenverkehr zu überwachen.

11. Einrichtung nach Anspruch 9, wobei die mindestens eine Detektorschaltung für einen Datenverkehr (140) mit einer oder mehreren Protokollsteuereinheiten innerhalb der Protokollsteuerschicht gekoppelt ist, um den E/A-Datenverkehr zu überwachen.

## Revendications

1. Appareil comprenant :
une structure d'interconnexion d'entrée/sortie, E/S, (127) ;
une interface d'E/S (125) configurée pour coupler un ou plusieurs dispositifs d'E/S (150) à la structure d'interconnexion d'E/S (127), l'interface d'E/S (125) comprenant au moins un circuit de détection de trafic (140) ; et
un circuit de contrôle (137) couplé à l'au moins un circuit détecteur de trafic (140), le circuit de contrôle (137) étant configuré pour augmenter la fréquence de fonctionnement de la structure d'interconnexion d'E/S (127) en réponse à une détection par l'au moins un circuit détecteur de trafic (140) d'un trafic de données d'E/S élevé au-dessus d'un premier seuil,
où l'au moins un circuit détecteur de trafic (140) comporte un premier circuit comparateur (215) configuré pour surveiller des files d'attente de données de l'interface d'E/S (125), qui indiquent une quantité du trafic de données d'E/S circulant ou tentant de circuler à travers l'interface d'E/S (125), pour détecter le trafic de données d'E/S élevé au-dessus du premier seuil, le premier seuil étant défini par une valeur seuil de données programmable stockée dans un registre (230),
où l'au moins un circuit détecteur de trafic (140) comporte un deuxième circuit comparateur (225) configuré pour surveiller les files d'attente de demande de l'interface d'E/S (125) pour les demandes de lecture et d'écriture, qui indiquent une quantité de trafic de demande d'E/S pour des données qui vont circuler ou qui essaient de circuler à travers l'interface d'E/S (125), pour détecter le trafic de demande d'E/S élevé au-dessus d'un deuxième seuil, le deuxième seuil étant défini par une valeur seuil programmable de demande stockée dans le registre (230), et
où les données et les files d'attente de demandes sont surveillées de manière indépendante par le circuit détecteur de trafic (140).

2. Appareil selon la revendication 1, dans lequel l'interface d'E/S (125) comporte une pluralité de canaux (130) configurés pour desservir les un ou plusieurs dispositifs d'E/S (150), où chaque canal (130) comporte un ou plusieurs des circuits détecteurs de trafic (140) au nombre d'au moins un.

3. Appareil selon la revendication 2, dans lequel le circuit de contrôle (137) est configuré pour élever la fréquence de la structure d'interconnexion d'E/S en réponse au fait que l'un quelconque des un ou plusieurs circuits de détection de trafic (140) détecte un trafic d'E/S dans un canal associé (130) qui est à un niveau de seuil de trafic associé, ou au-dessus.

4. Appareil selon la revendication 1, dans lequel le circuit de contrôle (137) est configuré pour augmenter la fréquence de fonctionnement de la structure d'interconnexion d'E/S (127) en réponse soit au fait que le trafic de données d'E/S est au niveau ou au-dessus du premier seuil, soit au fait que le trafic de demande d'E/S est au niveau ou au-dessus du deuxième seuil.

5. Appareil selon la revendication 1, dans lequel le circuit de contrôle (137) comprend un circuit matériel dédié configuré pour amener la fréquence opérationnelle de la structure d'interconnexion d'E/S à augmenter sans nécessiter une transition d'état de puissance.

6. Appareil selon la revendication 5, dans lequel le circuit de contrôle (137) fait partie d'un circuit d'unité de gestion de puissance (135).

7. Appareil selon la revendication 5, dans lequel le circuit de contrôle (137) fait partie de la structure d'interconnexion d'E/S (127).

8. Appareil selon la revendication 6 ou la revendication 7, dans lequel la structure d'interconnexion d'E/S (127) fait partie d'un processeur ayant au moins un cœur de traitement et une structure d'interconnexion de mémoire séparée.

9. Appareil selon la revendication 8, dans lequel l'au moins un circuit détecteur de trafic (140) fait partie d'une couche de contrôle de protocole à l'intérieur de l'interface d'E/S (125).

10. Appareil selon la revendication 9, dans lequel l'au moins un circuit détecteur de trafic (140) est couplé à un tampon asynchrone de type premier entré / premier sorti pour surveiller le trafic d'E/S.

11. Appareil selon la revendication 9, dans lequel l'au moins un circuit détecteur de trafic (140) est couplé à un ou plusieurs contrôleurs de protocole à l'intérieur de la couche de contrôle de protocole pour surveiller le trafic d'E/S.
